# EUROPÄISCHE PATENTSCHRIFT

(11) **EP 3 280 912 B1**
(45) Veröffentlichungstag und Bekanntmachung des Hinweises auf die Patenterteilung: **07.06.2023**
(21) Anmeldenummer: 16714937.6
(22) Anmeldetag: 08.04.2016
(51) Int. Cl.: F03D 80/60

(54) **WINDENERGIEANLAGE MIT FLÜSSIGKEITSKREISLAUF UND KOMPONENTEN DAFÜR**
WIND TURBINE HAVING A LIQUID CIRCUIT AND COMPONENTS THEREFOR
ÉOLIENNE À CIRCUIT DE LIQUIDE ET COMPOSANTS ASSOCIÉS

(30) Priorität: 10.04.2015 DE 102015206478
(43) Veröffentlichungstag der Anmeldung: 14.02.2018
(73) Patentinhaber: Wobben Properties GmbH, 26607 Aurich (DE)
(72) Erfinder: ENSKONATUS, Kai, 26759 Hinte (DE)
(74) Vertreter: Eisenführ Speiser
(86) Internationale Anmeldenummer: PCT/EP2016/057698
(87) Internationale Veröffentlichungsnummer: WO 2016/162457

(56) Entgegenhaltungen:
- EP-A1- 2 354 542
- WO-A1-2006/069974
- GB-A- 371 926
- GB-A- 2 294 755
- US-A1- 2015 010 402

## Beschreibung

Die vorliegende Erfindung betrifft eine Windenergieanlage mit wenigstens einem Flüssigkeitskreislauf und einem Ausgleichsbehälter und die vorliegende Erfindung betrifft einen solchen Flüssigkeitskreislauf. Weiterhin betrifft die vorliegende Erfindung ein Verfahren zum Betreiben einer Windenergieanlage sowie zum Betreiben eines Flüssigkeitskreislaufs einer Windenergieanlage.

Besonders zu Kühlzwecken können in Windenergieanlagen Flüssigkeitskreisläufe eingesetzt werden, die eine Kühlflüssigkeit, insbesondere Wasser mit einem Zusatz, durch entsprechende zu kühlende Komponenten führt. Der Aufbau ist dabei üblicherweise so, dass in dem Flüssigkeitskreislauf das Kühlmedium zu wenigstens einer zu kühlenden Komponente geleitet, insbesondere gefördert wird und dort Wärme dieser Komponente aufnimmt. Eine solche Komponente kann beispielsweise ein Generator oder ein Umrichter sein. Die so erwärmte Flüssigkeit wird dann weiter zu einem Rückkühler geleitet, in dem die Flüssigkeit gespeicherte Wärme wieder abgibt. Die so wieder gekühlte Flüssigkeit kann dann erneut zu der zu kühlenden Komponente geleitet werden. Grundsätzlich kann ein solcher Kühlkreislauf auch komplexer ausgestaltet sein und beispielsweise mehrere Komponenten kühlen, umschaltbar sein und/oder zum Wiederabkühlen mehrere Rückkühler verwenden.

Ein solcher Kühlkreislauf weist einen optimalen oder bevorzugten Druck oder Druckbereich auf, in dem er arbeitet. Dieser liegt bei Kühlkreisläufen für Windenergieanlagen häufig bei etwa 0,8 bar, also 0,8 bar Überdruck relativ zum Umgebungsdruck.

Um diesen Druck in dem System, also in dem Flüssigkeitskreislauf bzw. Kühlkreislauf zu halten, werden so genannte Membran-, Blasen- oder Metallbalgausgleichsbehälter verwendet. Insbesondere sind Ausgleichsbehälter mit Stickstoff gefüllten Gasblasen bekannt. Eine solche Gasblase kann geringe Volumenschwankungen im Kühlkreislauf ausgleichen und dabei den gewünschten Druck etwa halten.

Nachteilig bei solchen Ausgleichsbehältern ist, dass solches Gas dazu neigt, aus der Blase allmählich zu entweichen. Dem kann durch Nachfüllen von Kühlflüssigkeit begegnet werden, wobei die Kühlflüssigkeit so nachgefüllt wird, dass sich der gewünschte Druck wieder einstellt. Hierbei wird im Ergebnis aber nach und nach das Gasvolumen dieser Gasblase durch Kühlflüssigkeit ersetzt, bis diese Gasblase keine Funktion mehr hat und dann auch kein Druckausgleich mehr möglich ist.

Besonders problematisch ist hierbei, dass solche Kühlkreisläufe meist in der Gondel einer Windenergieanlage installiert sind und daher eine Wartung sehr aufwändig ist. Auch das Nachfüllen der Kühlflüssigkeit kann sehr aufwändig sein.

Bisher sind keine Gasblasen bzw. geeigneten Gase gefunden worden, die das geschilderte Problem vermeiden, so dass bisher auch eine Verbesserung der Gasblase schwierig erscheint.

Die WO 2006/069974 A1 offenbart einen Transformator mit Kühlkreislauf für den Unterwasserbetrieb. Der Transformator ist auf einer Plattform an dem unteren Turmbereich einer Offshore-Windenergieanlage angebracht und weist einen Kühlkreislauf auf, der mit einer von Meerwasser umspülten Wärmetauschereinheit verbunden ist. Der Kühlkreislauf umfasst ein Flüssigkeitsausdehnungsgefäß, das über einen Luftentfeuchter ständig mit der Außenatmosphäre verbunden ist.

Die EP 2 354 542 A1 beschreibt ein Kühlsystem für einen Generator einer Windenergieanlage. Das Kühlsystem umfasst mehrere Wärmetauscher und eine Pumpe, mit der ein Betriebsdruck in dem Kühlsystem erzeugt wird.

Das Deutsche Patent- und Markenamt hat in der Prioritätsanmeldung zu vorliegender Anmeldung folgenden Stand der Technik recherchiert: DE 10 2014 205 086 B3, DE 10 2008 017 376 A1, DE 20 2007 019 340 U1 und JP H09-273 876 A.

Der Erfindung liegt somit die Aufgabe zugrunde, zumindest eines der genannten Probleme zu adressieren. Insbesondere soll der Kühlkreislauf einer Windenergieanlage und damit die Windenergieanlage als solche derart verbessert werden, dass die geschilderten Probleme mit der Gasblase überwunden werden. Zumindest soll gegenüber bisher Bekanntem eine alternative Lösung vorgeschlagen werden.

Erfindungsgemäß wird ein Kühlkreislauf gemäß Anspruch 1 vorgeschlagen. Der Kühlkreislauf umfasst eine Kühlflüssigkeit, einen Kühlabschnitt zum Kühlen einer Komponente der Windenergieanlage durch die Kühlflüssigkeit, einen Rückkühler zum Kühlen der Kühlflüssigkeit, ein Leitungssystem zum Leiten der Kühlflüssigkeit und einen Ausgleichsbehälter zum Erhalten eines Betriebsdrucks des Flüssigkeitskreislaufs, wobei der Ausgleichsbehälter oberhalb des Rückkühlers angeordnet ist und einen Druck in dem Flüssigkeitskreislauf durch einen statischen Druck einer Flüssigkeitssäule bewirkt. Der Ausgleichsbehälter weist ein Ausgleichsventil auf. Durch ein solches Ausgleichsventil kann Druck nach außen entweichen, wenn in dem Ausgleichsbehälter ein Überdruck herrscht, oder es kann Druck in den Ausgleichsbehälter von außen eingelassen werden, wenn ein entsprechender Unterdruck in dem Ausgleichsbehälter herrscht. Das bedeutet insbesondere, dass bei Überdruck Luft aus dem Ausgleichsbehälter entweichen bzw. bei Unterdruck Luft in den Ausgleichsbehälter einströmen kann. Vorzugsweise ist dieses Ausgleichsventil somit an einer oben gelegenen Position des Ausgleichsbehälters, so dass dadurch nicht die Kühlflüssigkeit entweicht, sondern nur sich oben angesammelte Luft.

Der Überdruck, bei dem Druck nach außen entweicht, ist als vorbestimmter Überdruck einstellbar. Der Druck entweicht also durch das Ausgleichsventil, wenn er diesen vorbestimmten Überdruck erreicht hat oder überschreitet. Außerdem oder alternativ wird vorgeschlagen, dass der Unterdruck, bei dem Druck von außen eingelassen wird, als ein vorbestimmter Unterdruck eingestellt werden kann. Entsprechend wird Druck bzw. Luft von außen eingelassen, wenn der Druck in dem Ausgleichsbehälter um diesen vorbestimmten Unterdruck oder einen betragsmäßig größeren Wert unter dem Umgebungsdruck liegt.

Durch dieses Ausgleichsventil ist besonders ein Kommunizieren des Ausgleichsbehälters mit der Umgebung möglich, ohne dass dieser vollständig zur Umgebung geöffnet ist. Bei geringen Druckschwankungen im Flüssigkeitskreislauf und damit im Ausgleichsbehälter bleibt dieser Flüssigkeitskreislauf ein geschlossenes System und kommuniziert erst bei den erläuterten Drücken mit der Umgebung.

Es wird somit ein Flüssigkeitskühlkreis vorgeschlagen, der ohne einen Membran-, Blasen- oder Metallbalgausgleichsbehälter auskommt. Stattdessen wird ein Ausgleichsbehälter vorgesehen, der in einer solchen Höhe angeordnet wird, dass sich eine Flüssigkeitssäule, also insbesondere eine Wassersäule einstellt, die dadurch einen Druck erreichen kann. Dabei wird vorzugsweise Wasser verwendet, das mit einem Zusatz versehen ist, insbesondere einem Gefrierschutz.

Der Ausgleichsbehälter wird somit über dem restlichen Flüssigkeitskühlkreislauf in einer entsprechenden Höhe angebracht, beispielsweise etwa 8 m über einem Referenzpunkt, an dem der Druck gemessen wird. Dadurch kann ein Druck von etwa 0,8 bar an dem Referenzpunkt eingehalten werden.

Außerdem wird eine Windenergieanlage vorgeschlagen, die eine Gondel aufweist und einen erfindungsgemäßen Flüssigkeitskreislauf umfasst.

Vorzugsweise ist der Ausgleichsbehälter oben auf der Gondel angeordnet und dadurch kann eine entsprechende Wassersäule von diesem Ausgleichsbehälter zum darunter liegenden übrigen Flüssigkeitskreislauf aufgebaut werden.

Vorzugsweise wird ein gegen UV-Einstrahlung sicherer Behälter verwendet, insbesondere ein Metallbehälter, der somit auch außen angeordnet werden kann, wo er ständiger UV-Einstrahlung ausgesetzt ist.

Gemäß einer Ausführungsform wird vorgeschlagen, dass der Flüssigkeitskreislauf einen außen auf der Gondel angeordneten Rückkühler aufweist und auf diesem Rückkühler der Ausgleichsbehälter angeordnet ist. Hierdurch kann besonders die Konstruktion vereinfacht werden und der Rückkühler kann durch den Wind im Bereich oberhalb der Gondel gut gekühlt werden und gleichzeitig den Ausgleichsbehälter aufnehmen. Dadurch kann der Ausgleichsbehälter auf einfache Art und Weise auf einem hohen Punkt, insbesondere dem höchsten Punkt des Flüssigkeitskreislaufs angeordnet werden. Es kann hierdurch auch besonders effektiv verhindert werden, dass sich nennenswerte Lufteinschlüsse in dem Rückkühler bilden, weil diese leicht nach oben in den Ausgleichsbehälter entweichen können.

Gemäß einer weiteren Ausführungsform wird vorgeschlagen, dass der Ausgleichsbehälter ein Schauglas aufweist bzw. damit gekoppelt ist. Ein solches Schauglas, das insbesondere als senkrechte Glasröhre oder Plexiglasröhre ausgebildet sein kann, kann der Flüssigkeitsstand im Ausgleichsbehälter angezeigt werden. Die Flüssigkeit steigt und fällt also im Schauglas und im Ausgleichsbehälter gleichermaßen. Insbesondere ist das Schauglas dafür unten und oben jeweils an dem Ausgleichsbehälter angeschlossen.

Vorzugsweise ist eine Schutzummantelung vorgesehen, die das Schauglas teilweise, insbesondere zum überwiegenden Teil ummantelt, so dass das Schauglas vor umherfliegenden Partikeln und/oder starken Windeinwirkungen geschützt ist, gleichwohl von außen aber so einsehbar ist, dass der Füllstand erkannt werden kann. Im Falle eines etwa senkrechten, rohrförmigen Schauglases kann dieses in einer Draufsicht von der Schutzummantelung etwa U-förmig umschlossen sein, so dass also lediglich eine Seite einsehbar bleibt.

Gemäß einer Ausführungsform wird außerdem oder alternativ vorgeschlagen, dass ein Füllstandssensor vorgesehen ist. Ein solcher Füllstandssensor kann eine ähnliche Funktion wie das Schauglas erfüllen, ist aber elektrisch gekoppelt und kann dadurch anders ausgewertet werden. Insbesondere wird für den Füllstandssensor vorgeschlagen, dass er seine Daten an eine Auswerteeinrichtung übertragen kann, insbesondere an oder über ein SCADA-System. Somit kann der Füllstandssensor für eine Fernwartung genutzt werden und das Schauglas kann bei einem konkreten Besuch vor Ort genutzt werden. Außerdem könnte über das Schauglas auch eine Überprüfung der Funktionsfähigkeit des Füllstandssensors durchgeführt werden, sollten Schauglas und Füllstandssensor, was gemäß einer Ausführungsform vorgeschlagen wird, gleichzeitig verwendet werden.

Vorzugsweise ist ein Einfüllanschluss zum drucklosen Einfüllen der Kühlflüssigkeit in den Flüssigkeitskreislauf, insbesondere an dem Ausgleichsbehälter vorgesehen. Hierüber kann auf einfache Weise bei Bedarf Kühlflüssigkeit nachgefüllt oder ggf. auch ausgetauscht werden. Besonders vorteilhaft ist hierbei, dass das Vorsehen eines Druckanschlusses in dem Kühlkreislauf nicht notwendig ist, entsprechend auch eine daran angepasste Druckeinfüllvorrichtung nicht benötigt wird. Außerdem besteht hier auch weniger bzw. gar nicht die Gefahr, dass eine solche Einfüllöffnung zu einem Dichtigkeitsproblem führen kann. Ein solcher druckloser Einfüllanschluss wird oben angeordnet, so dass allein aufgrund seiner Anordnung die Kühlflüssigkeit dort nicht austreten kann und dieser Einfüllanschluss daher nicht undicht werden kann bzw. auch dann keine Kühlflüssigkeit ausläuft, wenn er undicht wäre.

Vorzugsweise ist der Kühlkreislauf zum Kühlen mit wenigstens einem Generator, einem elektrischen Umrichter und/oder einem elektrischen Gleichrichter der Windenergieanlage verbunden. Die Kühlflüssigkeit wird also durch den Generator, den Umrichter und/oder den Gleichrichter zum Kühlen geführt bzw. wird dort jeweils in der Nähe durch eine entsprechende Kühleinrichtung geführt, um den Generator, Umrichter bzw. Gleichrichter zu kühlen. Hierdurch kann auf einfache Art und Weise eine Kühlung dieser Elemente erreicht werden.

Außerdem wird ein Verfahren zum Betreiben einer Windenergieanlage gemäß Anspruch 9 vorgeschlagen. Die Anlage wird hierbei so betrieben, dass Elemente der Windenergieanlage durch die Kühlflüssigkeit gekühlt werden. Vorzugsweise ist die Windenergieanlage und/oder der Kühlkreislauf so ausgebildet, wie oben unter Bezugnahme auf wenigstens eine Ausführungsform erläutert wurde.

Nachfolgend wird die Erfindung exemplarisch anhand einer Ausführungsform unter Bezugnahme auf die begleitenden Figuren näher erläutert.
- Figur 1: zeigt eine Windenergieanlage in einer perspektivischen Ansicht.
- Figur 2: zeigt schematisch einen Ausschnitt aus einem Kühlkreislauf.
- Figur 3: zeigt einen Rückkühler mit einem Ausgleichsbehälter.
- Figuren 4 bis 6: zeigen Details eines wie in Figur 3 dargestellten Ausgleichsbehälters.

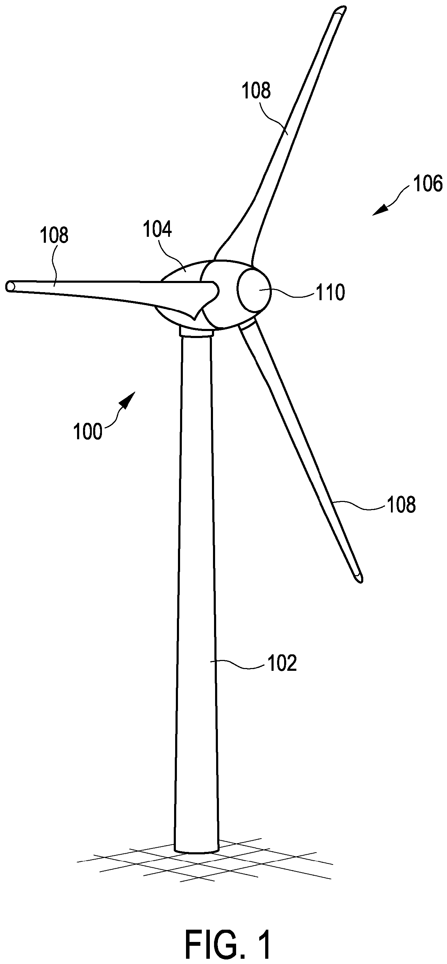

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

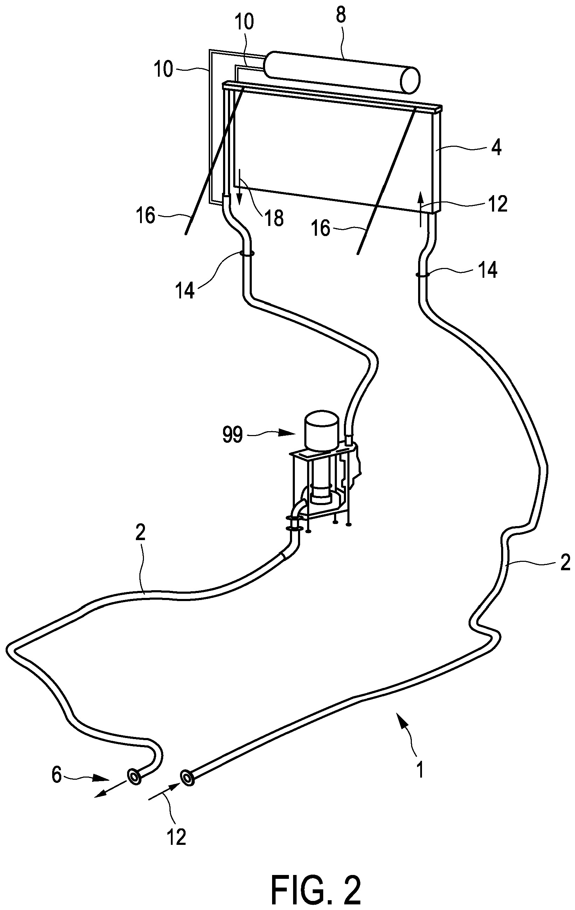

Figur 2 zeigt schematisch einen Ausschnitt eines Flüssigkeitskreislaufs 1 einer Windenergieanlage. Dieser Flüssigkeitskreislauf 1 zeigt ein Leitungssystem 2 und einen Rückkühler 4 sowie Anschlussstellen 6 zum Anschließen eines Kühlabschnitts einer Komponente der Windenergieanlage, wie beispielsweise einen Generator, Umrichter oder Gleichrichter. Diese Komponenten sind hier in der Figur 2 der Einfachheit halber nicht dargestellt.

Zum Erhalten des Drucks in dem Flüssigkeitskreislauf 1 ist ein Ausgleichsbehälter 8 vorgesehen, der hier oberhalb bzw. auf dem Rückkühler 4 angeordnet ist. Der Ausgleichsbehälter 8 ist dabei über hier nur schematisch dargestellte Anschlussleitungen 10 mit dem Flüssigkeitskreislauf 1 verbunden. Das kann beispielsweise und teilweise zu dem Rückkühler 4 sein oder zu dem Leitungssystem 2.

Über diesen Ausgleichsbehälter 8 kann nun ein vergleichsweise konstanter Druck in dem Flüssigkeitskreislauf 1 gehalten werden. Dies wird dadurch erreicht, dass der Ausgleichsbehälter 8 höher als ein Großteil des Flüssigkeitskreislaufs, insbesondere ein Großteil des Leitungssystems angeordnet ist. Dadurch wird eine Flüssigkeitssäule, insbesondere Wassersäule aufgebaut, die den Druck halten bzw. bewirken kann. Schwankungen des Füllstands der Kühlflüssigkeit in dem Flüssigkeitskreislauf können in dem Ausgleichsbehälter 8 leicht ausgeglichen werden. Dies erfolgt so, dass sich diese leichten Schwankungen auch in dem Ausgleichsbehälter 8 bemerkbar machen, dies auf die Gesamtflüssigkeitssäule aber kaum Einfluss hat und somit der Druck sich kaum ändert.

Nur zu Erläuterungszwecken ist auch noch ein Membran-, Blasen- oder Metallbalgausgleichsbehälter 99 in dem Kühlkreislauf 1 eingezeichnet, der erfindungsgemäß aber vermieden werden soll. Es wird also vorgeschlagen, diesen Blasenausgleichsbehälter 99 weg zu lassen und dort insbesondere das Leitungssystem 2 ohne diesen Blasenausgleichsbehälter 99 zu schließen.

Die Funktionsweise erfolgt nun so, dass erwärmte Kühlflüssigkeit 12 an der Anschlussstelle 6 in das Leitungssystem 2 des Flüssigkeitskreislaufs 1 einströmt. Diese erwärmte Kühlflüssigkeit 12 kann in einer Komponente erwärmt worden sein, die zu kühlen ist, also beispielsweise im Generator. Die Kühlflüssigkeit 12 wird dann weiter, beispielsweise durch eine nicht dargestellte Förderpumpe, nach oben zum Rückkühler 4 befördert. Dieser Rückkühler 4 kann zusammen mit den Ausgleichsbehälter 8 außen auf der Gondel der Windenergieanlage angeordnet sein. Dazu sind in Figur 2 zwei Durchlassstellen 14 angedeutet. Auf der Gondel kann der Rückkühler 4 über Stützen 16 befestigt sein, die hier nur schematisch dargestellt sind.

Die erwärmte Kühlflüssigkeit 12 strömt dann also von unten in den Rückkühler 4 ein, wird dort gekühlt und verlässt den Rückkühler 4 als abgekühlte Kühlflüssigkeit 18. Zurück durch die eine Durchlassstelle 14 gelangt die abgekühlte Kühlflüssigkeit 18 dann durch das Leitungssystem zur Anschlussstelle 6 und kann von dort wieder zum Kühlen, also in dem beispielhaft genannten Generator, verwendet werden.

Treten nun Schwankungen auf, z.B. in Folge von Temperaturänderungen des Kühlmediums und der damit einhergehenden Volumenänderung desselbigen, so überträgt sich dies auf den Ausgleichsbehälter 8, der das entsprechend ausgleichen kann. Dazu können die Anschlussleitungen 10 vorgesehen sein. Außerdem kann auch aufsteigende Luft über wenigstens eine der Anschlussleitungen 10 in den Ausgleichsbehälter 8 gelangen. Dies kann von unterschiedlichen Stellen des Flüssigkeitskreislaufs 1 erfolgen, also beispielsweise aus dem Leitungssystem 2 oder dem Rückkühler 4.

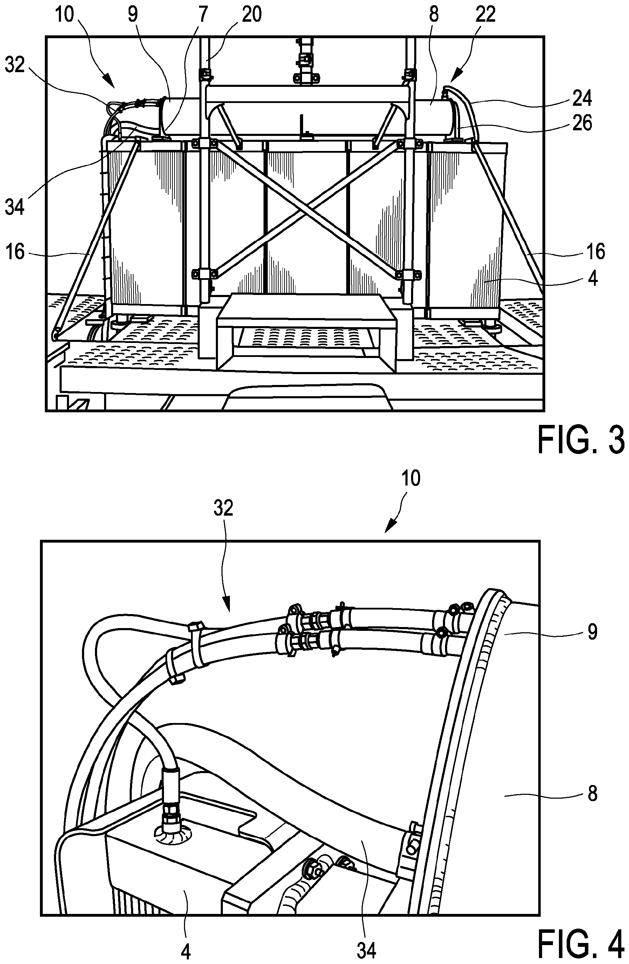

Figur 3 zeigt den Rückkühler 4 mit aufgesetztem Ausgleichsbehälter 8 in einer größeren und weniger schematischen Darstellung. Der Einfachheit halber werden dieselben Bezugszeichen verwendet, zumal Figur 2 nur eine schematische Darstellung ist, wohingegen die Figuren 3 bis 6 eine konkrete Umsetzung zeigen. Im Übrigen ist der Rückkühler 4 auch in Figur 3 mit den Stützen 16 abgestützt.

Figur 3 zeigt im Übrigen weitere Aufbauten wie die zum Teil dargestellte Rohrkonstruktion 20, die beispielsweise eine Flugbefeuerung aufnehmen könnte oder ein Anemometer, worauf es hier nicht ankommt.

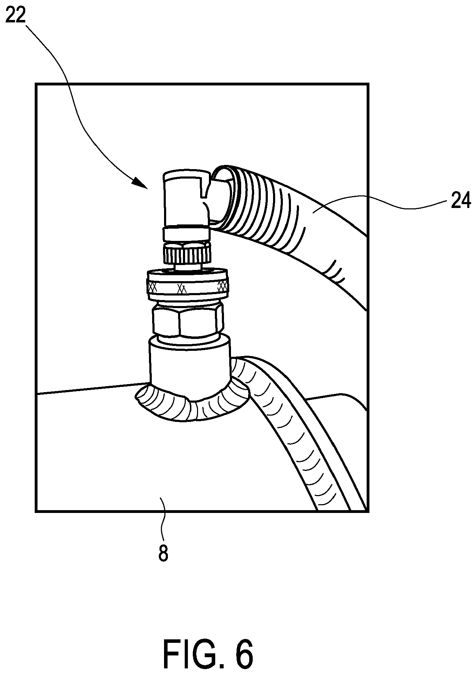

Figur 3 zeigt zudem einen Anschluss eines Füllstandssensors 22, der in Figur 6 vergrößert dargestellt ist. Dort wird von oben über diesen Anschluss 22 ein Füllstandssensor eingeführt und ist dort angeschlossen, der beispielsweise als langer zylinderförmiger Körper ausgebildet sein kann, der dort in den Ausgleichsbehälter 8 hineinragt. Er kann angesteuert und ausgewertet werden über eine Anschlussleitung 24, die hier zum Schutz ummantelt ist.

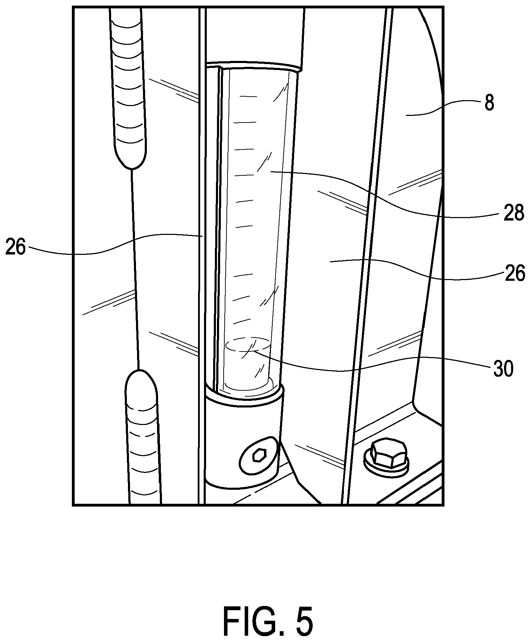

Unmittelbar benachbart zu dem Füllstandssensor, dessen Anschluss 22 dargestellt ist, befindet sich ein Schauglas in einer Schutzummantelung 26. Diese Schutzummantelung 26 ist in der Figur 3 noch im Ansatz zu erkennen, aber in Figur 5 in einem Ausschnitt und in einer Perspektive bezogen auf Figur 3 im Wesentlichen von rechts vergrößert dargestellt. In Figur 5 ist dabei zu erkennen, dass diese Schutzummantelung 26 das Schauglas 28 im Wesentlichen von zwei Seiten und von oben, was nur in Figur 3 zu erkennen ist, schützt. Von einer dritten Seite ist das Schauglas durch den Ausgleichsbehälter 8 geschützt. In dem Schauglas 28 lässt sich der derzeitige Füllstand 30 der Kühlflüssigkeit ablesen.

In Figur 2 schematisch dargestellte Anschlussleitungen 10 sind in Figur 3 auch zu erkennen und in Figur 4 vergrößert dargestellt. Hierbei sind mehrere Entlüftungsleitungen 32 vorhanden, die in einem oberen Bereich 9 des Ausgleichsbehälters 8 münden. Eine der Entlüftungsleitungen 32 ist dabei unmittelbar mit dem Rückkühler 4 verbunden, so dass Luft von diesem oberen Bereich des Rückkühlers 4 in den Ausgleichsbehälter 8 entlüften kann. Weitere der Entlüftungsleitungen 32 verlaufen weiter nach unten, auch in die Gondel der Windenergieanlage hinein, um dort andere Stellen entlüften zu können.

Weiterhin ist eine Nachsaugleitung 34 vorgesehen, über die der Ausgleichsbehälter 8 in einem unteren Bereich 7 zum Flüssigkeitsaustausch mit dem übrigen Flüssigkeitskreislauf 1, insbesondere dem Leitungssystem 2 verbunden ist.

Es wird somit für diese Ausführungsform und allgemein vorgeschlagen, einen Flüssigkeitskreislauf einer Windenergieanlage durch Verwendung eines Ausgleichsbehälters zu verbessern, der insbesondere eine bisher bekannte Druckausgleichsvorrichtung mit Membran-, Blasen- oder Metallbalg ersetzt. Der vorgeschlagene Ausgleichsbehälter kommt also ohne Membran und ohne Blasen und ohne Metallbalg aus, indem er den statischen Druck der Flüssigkeitssäule ausnutzt.

Vorteile hierbei sind, dass ein solcher Ausgleichsbehälter verschleißfrei ist und eine automatische Entlüftung des Systems ermöglicht, was auch als automatischer Entlüfter bezeichnet werden kann. Das System kann ohne zusätzliche Pumpe befüllt werden. Die richtige Handhabung dieses Systems, insbesondere das Durchführen oder Ausnutzen einer Füllstandskontrolle ist sehr einfach und kann ohne Hilfsmittel durchgeführt werden, weil insbesondere ein Schauglas dafür vorgeschlagen wird. Auch die Verfügbarkeit des Flüssigkeitskreislaufs und damit der Windenergieanlage insgesamt kann gesteigert werden, weil dieses Kühlsystem mit einem Blick geprüft werden kann und Fehler schnelter erkannt werden können. Insbesondere bekannte Membran-, Blasen- oder Metallbalgausgleichsbehälter lassen häufig nicht erkennen, wenn sie bereits schlechter oder vielleicht sogar gar nicht mehr funktionieren.

Somit waren solche Membran-, Blasen- oder Metallbalgausgleichsbehälter ein Verschleißteil, dessen Handhabung schwierig war und bei denen ein Vordruck richtig eingestellt werden muss, weil ansonsten eine Funktionsstörung der gesamten Anlage riskiert wurde. Besonders musste ein solcher Vordruck jährlich geprüft werden, was zeitintensiv war. Eine automatische Entlüftung war ebenso wenig möglich oder zumindest risikobehaftet, weil dadurch das System leerlaufen kann, wenn diese nicht ordnungsgemäß schließen, was vorgekommen ist. Zum Befüllen war beim bisherigen System eine Befüllpumpe zwingend erforderlich, weil das System unter Druck steht. Ein ähnliches Problem trat auf, wenn ein Sensortausch der Füllstandsüberwachung durchgeführt werden musste, weil dies nur mit Teilentleerung und natürlich anschließender Wiederbefüllung des Systems möglich war. Es kann also die Verfügbarkeit erhöht werden und eine erhebliche Vereinfachung der Handhabung des Systems erreicht werden, wodurch eine Reduzierung der erforderlichen Qualifikation des Personals möglich wäre.

Es wurde zudem auch vorgeschlagen, eine Füllstandsüberwachung an einer Stelle zu platzieren, an der ein Sensortausch ohne Teilentleerung des Systems möglich ist. Auch das Schauglas wird an gut zugänglicher Stelle platziert aber gleichzeitig durch äußere mechanische Einflüsse geschützt.

Es wird auch vorgeschlagen, den Behälter so zu dimensionieren, dass ein Öffnen einer Druckkappe, also insbesondere das Öffnen eines Ausgleichsventils vermieden wird. Es wird somit vorgeschlagen, den Ausgleichsbehälter so zu dimensionieren, dass zu erwartende Schwankungen, die sich insbesondere in Schwankungen des Füllstands in dem Behälter bemerkbar machen, bezogen auf die vorgesehene Luftmenge in dem Behälter, eine entsprechend geringe Druckvariation dieses Luftvolumens bewirken.

## Patentansprüche

1. Flüssigkeitskreislauf (1) zur Verwendung in einer Windenergieanlage, die eine Gondel aufweist, mit
einer Kühlflüssigkeit,
einem Kühlabschnitt zum Kühlen einer Komponente der Windenergieanlage durch die Kühlflüssigkeit,
einem Rückkühler (4) zum Kühlen der Kühlflüssigkeit,
einem Leitungssystem (2) zum Leiten der Kühlflüssigkeit,
wobei der Flüssigkeitskreislauf einen Ausgleichsbehälter (8) aufweist, der oberhalb des Rückkühlers (4) angeordnet ist und durch einen statischen Druck einer Flüssigkeitssäule einen Druck zum Erhalten eines Betriebsdrucks des Flüssigkeitskreislaufs (1) bewirkt,
**dadurch gekennzeichnet, dass**
der Ausgleichsbehälter (8) ein Ausgleichsventil aufweist, das so ausgelegt ist, dass es
- ab einem vorbestimmten Überdruck Druck nach außen ablässt und
- ab einem vorbestimmten Unterdruck Druck von außen einlässt.

2. Windenergieanlage, die eine Gondel aufweist und einen Flüssigkeitskreislauf (1) nach Anspruch 1 umfasst.

3. Windenergieanlage nach Anspruch 2, **dadurch gekennzeichnet, dass** der Ausgleichsbehälter (8) oben auf der Gondel angeordnet ist.

4. Windenergieanlage nach Anspruch 2 oder 3, **dadurch gekennzeichnet, dass** der Flüssigkeitskreislauf (1) einen außen auf der Gondel angeordneten Rückkühler (4) aufweist und auf diesem Rückkühler (4) der Ausgleichsbehälter (8) angeordnet ist.

5. Windenergieanlage nach einem der vorstehenden Ansprüche 2 bis 4, **dadurch gekennzeichnet, dass** der Ausgleichsbehälter (8) ein Schauglas (28) aufweist und/oder damit gekoppelt ist, das den Flüssigkeitsstand im Ausgleichsbehälter (8) anzeigen kann, wobei insbesondere eine Schutzummantelung (26) zum teilweisen Ummanteln des Schauglases (28) vorgesehen ist.

6. Windenergieanlage nach einem der vorstehenden Ansprüche 2 bis 5, **dadurch gekennzeichnet, dass** ein Füllstandssensor (22) vorgesehen ist, zum Erfassen eines Füllstands (30) der Kühlflüssigkeit in dem Ausgleichsbehälter (8).

7. Windenergieanlage nach einem der vorstehenden Ansprüche 2 bis 6, **dadurch gekennzeichnet, dass** der Flüssigkeitskreislauf (1), insbesondere der Ausgleichsbehälter (8), einen Einfüllanschluss zum drucklosen Einfüllen der Kühlflüssigkeit aufweist.

8. Windenergieanlage nach einem der vorstehenden Ansprüche 2 bis 7, **dadurch gekennzeichnet, dass** der Kühlkreislauf zum Kühlen mit wenigstens einem Generator, einem Umrichter und/oder einem Gleichrichter der Windenergieanlage gekoppelt ist.

9. Verfahren zum Betreiben einer Windenergieanlage, die eine Gondel aufweist, mit wenigstens einem Flüssigkeitskreislauf (1) mit
einer Kühlflüssigkeit,
einem Kühlabschnitt zum Kühlen einer Komponente der Windenergieanlage durch die Kühlflüssigkeit,
einem Rückkühler (4) zum Kühlen der Kühlflüssigkeit,
einem Leitungssystem (2) zum Leiten der Kühlflüssigkeit und
einem Ausgleichsbehälter (8) zum Erhalten eines Betriebsdrucks des Flüssigkeitskreislaufs (1), wobei
der Ausgleichsbehälter (8), der oberhalb eines Rückkühlers angeordnet ist und durch einen statischen Druck einer Flüssigkeitssäule einen Druck in dem Flüssigkeitskreislauf (1) bewirkt und Elemente der Windenergieanlage, insbesondere ein Generator, ein Umrichter und/oder ein Gleichrichter, durch die Kühlflüssigkeit gekühlt werden, und wobei der Ausgleichsbehälter (8) ein Ausgleichsventil aufweist, das so ausgelegt ist, dass es
- ab einem vorbestimmten Überdruck Druck nach außen ablässt und
- ab einem vorbestimmten Unterdruck Druck von außen einlässt.

## Claims

1. Liquid circuit (1) for use in a wind turbine having a nacelle, with
a coolant,
a cooling section for cooling a component of the wind turbine using the coolant,
a cooler (4) for cooling the coolant,
a piping system (2) for conveying the coolant,
wherein the liquid circuit has an expansion tank (8) which is arranged above the cooler (4) and by using static pressure of a liquid column establishes a pressure for obtaining an operating pressure of the liquid circuit (1),
**characterized in that**
the expansion tank (8) has an expansion valve which is configured such that:
- above a predetermined overpressure, it vents pressure outward and
- below a predetermined underpressure, it allows pressure in from outside.

2. Wind turbine having a nacelle and comprising a liquid circuit (1) according to claim 1 .

3. Wind turbine according to claim 2, **characterized in that** the expansion tank (8) is arranged on top of the nacelle.

4. Wind turbine according to claim 2 or 3, **characterized in that** the liquid circuit (1) has a cooler (4) arranged on the outside of the nacelle, and the expansion tank (8) is arranged on this cooler (4).

5. Wind turbine according to one of the preceding claims 2 to 4, **characterized in that** the expansion tank (8) has and/or is coupled to a sight glass (28) which can display the liquid level in the expansion tank (8), there being provided, in particular, a protective casing (26) for partially encasing the sight glass (28).

6. Wind turbine according to one of the preceding claims 2 to 5, **characterized in that** there is provided a fill level sensor (22) for detecting a fill level (30) of the coolant in the expansion tank (8).

7. Wind turbine according to one of the preceding claims 2 to 6, **characterized in that** the liquid circuit (1), in particular the expansion tank (8), has a filling connection for unpressurized filling of the coolant.

8. Wind turbine according to one of the preceding claims 2 to 7, **characterized in that** the cooling circuit is coupled, for cooling, to at least one generator, one converter and/or one rectifier of the wind turbine.

9. Method for operating a wind turbine having a nacelle, with at least one liquid circuit (1) with
a coolant,
a cooling section for cooling a component of the wind turbine using the coolant,
a cooler (4) for cooling the coolant,
a piping system (2) for conveying the coolant and
an expansion tank (8) for obtaining an operating pressure of the liquid circuit (1), wherein
the expansion tank (8) which is arranged above the cooler (4) and establishes a pressure in the liquid circuit (1) due to a static pressure of a liquid column and elements of the wind turbine, in particular a generator, converter and/or rectifier, are cooled using the coolant, and wherein
the expansion tank (8) has an expansion valve which is configured such that:
- above a predetermined overpressure, it vents pressure outward and
- below a predetermined underpressure, it allows pressure in from outside.

## Revendications

1. Circuit de liquide (1) destiné à être utilisé dans une éolienne, qui présente une nacelle, avec
un liquide de refroidissement,
une section de refroidissement destinée à refroidir un composant de l'éolienne par le liquide de refroidissement,
un refroidisseur à reflux (4) destiné à refroidir le liquide de refroidissement,
un système d'acheminement (2) destiné à acheminer le liquide de refroidissement,
dans lequel le circuit de liquide présente un contenant de compensation (8), qui est disposé au-dessus du refroidisseur à reflux (4) et qui produit, du fait d'une pression statique d'une colonne de liquide, une pression pour maintenir une pression de fonctionnement du circuit de liquide (1),
**caractérisé en ce que**
le contenant de compensation (8) présente une soupape de compensation qui est conçue de telle sorte que
- elle laisse s'échapper vers l'extérieur de la pression à partir d'une surpression prédéfinie, et
- elle laisse rentrer depuis l'extérieur de la pression à partir d'une dépression prédéfinie.

2. Eolienne qui présente une nacelle et comprend un circuit de liquide (1) selon la revendication 1.

3. Eolienne selon la revendication 2, **caractérisée en ce que** le contenant de compensation (8) est disposé en haut sur la nacelle.

4. Eolienne selon la revendication 2 ou 3, **caractérisée en ce que** le circuit de liquide (1) présente un refroidisseur à reflux (4) disposé à l'extérieur sur la nacelle et le contenant de compensation (8) est disposé sur ledit refroidisseur à reflux (4).

5. Eolienne selon l'une quelconque des revendications précédentes 2 à 4, **caractérisée en ce que** le contenant de compensation (8) présente un regard en verre (28) et/ou y est couplé, lequel peut afficher le niveau de liquide dans le contenant de compensation (8), dans laquelle en particulier une gaine de protection (26) est prévue pour envelopper en partie le regard en verre (28) .

6. Eolienne selon l'une quelconque des revendications 2 à 5, **caractérisée en ce qu'**un capteur de niveau de remplissage (22) est prévu pour détecter un niveau de remplissage (30) du liquide de refroidissement dans le contenant de compensation (8).

7. Eolienne selon l'une quelconque des revendications précédentes 2 à 6, **caractérisée en ce que** le circuit de liquide (1), en particulier le contenant de compensation (8), présente un raccord de transvasement pour transvaser sans pression le liquide de refroidissement.

8. Eolienne selon l'une quelconque des revendications précédentes 2 à 7, **caractérisée en ce que** le circuit de refroidissement est couplé pour le refroidissement à au moins un générateur, un convertisseur et/ou un redresseur de l'éolienne.

9. Procédé pour faire fonctionner une éolienne, qui présente une nacelle, avec au moins un circuit de liquide (1) avec
un liquide de refroidissement,
une section de refroidissement destinée à refroidir un composant de l'éolienne par le liquide de refroidissement,
un refroidisseur à reflux (4) destiné à refroidir le liquide de refroidissement,
un système d'acheminement (2) destiné à acheminer le liquide de refroidissement, et
un contenant de compensation (8) pour maintenir une pression de fonctionnement du circuit de liquide (1), dans lequel
le contenant de compensation (8), qui est disposé au-dessus d'un refroidisseur à reflux, produit, du fait d'une pression statique d'une colonne de liquide, une pression dans le circuit de liquide (1) et des éléments de l'éolienne, en particulier un générateur, un convertisseur et/ou un redresseur, sont refroidis par le liquide de refroidissement, et dans lequel
le contenant de compensation (8) présente une soupape de compensation qui est conçue de telle sorte
- qu'elle laisse s'échapper vers l'extérieur de la pression à partir d'une surpression prédéfinie, et
- qu'elle laisse entrer depuis l'extérieur de la pression à partir d'une dépression prédéfinie.
